# EUROPEAN PATENT SPECIFICATION

(11) **EP 3 464 880 B1**
(45) Date of publication and mention of the grant of the patent: **22.04.2020**
(21) Application number: 17724023.1
(22) Date of filing: 16.05.2017
(51) Int. Cl.: H01R 35/02, F03B 13/26, F16B 2/02

(54) **WATER CURRENT POWER GENERATING SYSTEMS**
WASSERSTRÖMUNGSTROMERZEUGUNGSSYSTEME
SYSTÈMES DE GÉNÉRATION D'ÉNERGIE HYDROLIENNE

(30) Priority: 26.05.2016 GB 201609305
(43) Date of publication of application: 10.04.2019
(73) Proprietor: Tidal Generation Limited, London, W6 8BJ (GB)
(72) Inventor: GERMAIN, Christopher Melville, Bristol Gloucestershire BS1 3AG (GB)
(74) Representative: Openshaw & Co.
(86) International application number: PCT/EP2017/061769
(87) International publication number: WO 2017/202655

(56) References cited:
- EP-A1- 2 856 577
- WO-A1-2016/034840
- DE-A1-102012 207 378

## Description

The present invention relates to water current power generating systems, and in particular to such systems which employ removable power generating apparatus.

### BACKGROUND OF THE INVENTION

It is widely known that easily accessible resources of fossil fuels are declining. In addition, the impact of the use of fossil fuels upon the environment has become increasingly apparent. As a result of this, it has become imperative that viable alternative energy sources are used as effectively and efficiently as possible. The use of turbines to capture the power of water flow, such as tidal, river and ocean current flows is becoming a viable source of alternative energy. The turbine equipment used to capture such water flow energy typically includes a shaft driven generator connected using a drivetrain to a rotor assembly. The rotor assembly includes a plurality of rotor blades that are driven by the water flow, so as to turn an input shaft of the drivetrain.

In order to be economically practical, multiple water current turbine devices need to be deployed in a suitable area. For example, a tidal turbine farm may have tens to hundreds of turbines. The turbines are preferably arranged in an array having multiple rows of multiple turbines. The turbine array could be deployed in a tidal flow area, a river flow, an ocean current, or any other suitable water current area. Although it is preferable for the turbines to be arranged in an array, geography, bathymetry and other factors may mean that a turbine farm has another arrangement.

Such turbine equipment needs to be secured to the bed of a body of water, such as a sea, estuary or river. Conventional underwater turbines used to drive electrical generators are mounted on a horizontal rotational axis and require a significant amount of ancillary features, in order to maximise energy capture. One such feature that is essential for efficient energy generation is yaw capability: it must be possible to direct the turbine to the most effective orientation with respect to the direction of current flow at any particular time.

Installation, maintenance and servicing of underwater power generation apparatus, particularly in deep sea environments, are highly costly and time consuming procedures. It is therefore desirable to simplify the construction and deployment of underwater power generation apparatus, lowering capital cost and reducing the frequency with which in service intervention is required.

EP 2,856,577 A1 relates to connection systems and, in particular, to connection systems for enabling rotation of one connector with respect to another. WO 2016/034840 A1 describes a power generating system comprising a power generating apparatus detachably coupled to a support structure by a clamp operable by an inductive auxiliary transformer.

### SUMMARY OF THE INVENTION

According to one aspect of the present invention, there is provided a water current power generating system comprising one or more of the following: a support structure located on the bed of a body of water and which may include an export connector for the export of electrical power from the system; a power generating apparatus which may include a rotor assembly, preferably an electrical power generating unit rotatable by the rotor assembly and preferably operable to output electrical power, and preferably an electrical output for export of electrical power from the power generating apparatus, the power generating apparatus preferably including an engagement portion which may be releasably attached to the support structure; a clamp mechanism for releasably attaching the power generating apparatus to the support portion, the clamp preferably having a first position in which the power generating apparatus may be fixed with respect to the support structure, preferably a second position in which the power generating apparatus may be rotatable about a substantially vertical axis with respect to the support structure, and preferably a third position in which the power generating apparatus may be removable from the support structure; a cable management system preferably arranged to connect the electrical power generating unit of the power generating apparatus to the power export connector of the support structure, the cable management system preferably comprising an internal connector located on the engagement portion of the power generating apparatus and preferably electrically connected with the power generating unit of the power generating apparatus; a first support plate attached to, and preferably extending at least partially around, an outer surface the engagement portion of the power generating apparatus for rotation therewith; a second support plate preferably mounted radially outwards of the first support plate for rotation about the axis with respect to the power generating apparatus; a power connector preferably mounted on the second support plate, and preferably movable between a first position in which the power connector may be disconnected from the export connector of the support structure and a second position in which the power connector may be electrically connected with the export connector of the support structure; and a flexible electrical cable which may extend from the internal connector to the power connector thereby connecting electrically those connectors, and which may be supported by the first and second support plates.

According to another aspect of the present invention, there is provided a cable management system for a water current power generating system. The cable management system may comprise a support structure located on the bed of a body of water and may include one or more of an export connector for the export of electrical power from the system, a power generating apparatus which may include a rotor assembly, an electrical power generating unit rotatable by the rotor assembly and preferably operable to output electrical power, and an electrical output for export of electrical power from the power generating apparatus, the power generating apparatus preferably including an engagement portion which may be releasably attached to the support structure, and a clamp mechanism for releasably attaching the power generating apparatus to the support portion, the clamp may have a first position in which the power generating apparatus may be fixed with respect to the support structure, preferably a second position in which the power generating apparatus may be rotatable about a substantially vertical axis with respect to the support structure, and preferably a third position in which the power generating apparatus may be removable from the support structure, the cable management system may be arranged to connect the electrical power generating unit of the power generating apparatus to the power export connector of the support structure, the cable management system may comprise one or more of the following: an internal connector for location on an engagement portion of a power generating apparatus to provide an electrical connection with the power generating unit of the power generating apparatus; a first support plate for attachment to an outer surface of such an engagement portion of the power generating apparatus for rotation therewith; a second support plate mountable radially outwards of the first support plate for rotation about the axis with respect to the power generating apparatus; a power connector mounted on the second support plate, and preferably movable between a first position in which the power connector may be disconnected from the export connector of the support structure and a second position in which the power connector may be electrically connected with the export connector of the support structure; and a flexible electrical cable which preferably extends from the internal connector to the power connector thereby connecting electrically those connectors, and which may be supported by the first and second support plates.

One example embodiment further comprises a connection actuator operable to move the power connector between the first and second positions thereof.

In one example, the power connector is moveable linearly between the first and second positions.

One example embodiment further comprises an alignment actuator which may be operable to rotate the second support plate about the axis with respect to the first support plate.

In one example, the flexible electrical cable may be provided by a cable having a reverse bend radius.

Features of the aspects and embodiments of the present invention may be readily combined with one or more features of any aspect or embodiment.

### BRIEF DESCRIPTION OF THE DRAWINGS

Figure 1 illustrates a water current power generating apparatus;
Figure 2 illustrates a first support structure for the apparatus of Figure 1;
Figure 3 illustrates a second support structure for the apparatus of Figure 1;
Figure 4 illustrates the power generating apparatus of Figure 1 in place on the support structure of Figure 3;
Figure 5 illustrates a connection system embodying an aspect of the present invention for the arrangement shown in Figure 4; and
Figure 6 illustrates a plan cross-sectional view, and Figure 7 illustrates a side cross-sectional view of an example connection system embodying another aspect of the present invention.

### DETAILED DESCRIPTION OF THE PREFERRED EMBODIMENTS

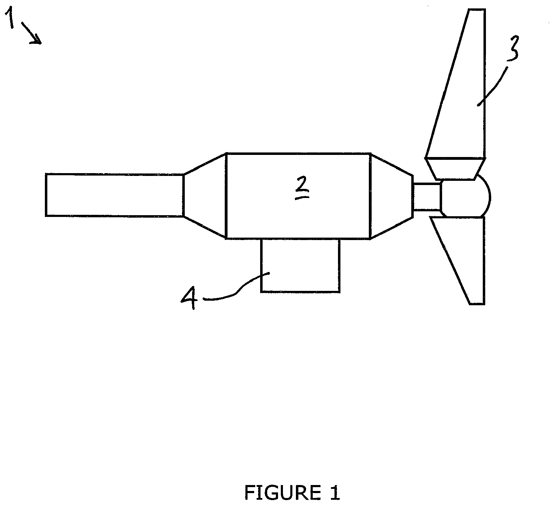

Figure 1 illustrates a water current power generating apparatus (PGA) 1 comprising an apparatus body 2, rotatable turbine 3, and an engagement portion 4. The water current PGA 1 is designed to be located underwater, for example, in a tidal body of water. The apparatus body 2 defines an inner space in which electrical power generating equipment is located. The electrical power generating equipment may include an electrical generator, a gearbox, and control equipment, as appropriate. The electrical power generating equipment is driven by a drive shaft that extends into the apparatus body 2, and which is caused to turn by the rotatable turbine 3. As a water current flows past the power generating apparatus 1, the rotatable turbine 3 is caused to rotate with respect to the apparatus body 2 and the equipment contained therein. This rotation causes a driveshaft to rotate, thereby causing the generator to rotate and generate electrical power. The rotatable turbine 3 may have any number of blades. The engagement portion 4 provides a substantially circular engagement surface for connection with a support structure.

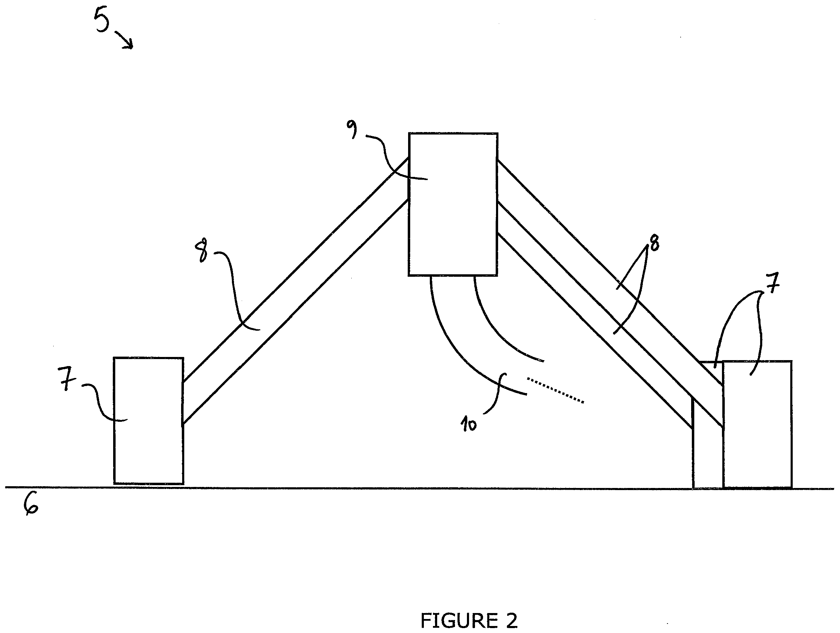

The PGA 1 must be supported in the body of water at an appropriate position in a body of water. The PGA 1 of Figure 1 is intended to be removable from such a support structure in order that the PGA 1 is able to be recovered for maintenance purposes. Figure 2 illustrates a first example support structure 5 for supporting the PGA 1. The support structure 5 is in the form of a tripod which is located on the bed 6 of a body of water. The support structure 5 comprises three support feet 7, from which respective support legs 8 extend. A PGA support 9 is held in place at a suitable position by the support legs 8. In the example shown in Figure 2, the support structure 5 provides a single, centrally mounted PGA support 9. In use, the PGA 1 is mounted for releasable engagement on the PGA support 9. The support structure 5 is secured to the bed 6 by the support feet 7, which may be pinned to the bed 6 using suitable pile structures.

The support structure 5 has an advantage that the centrally located PGA support 9 can have an open lower portion through which an electricity export cable 10 can be connected with the PGA when mounted on the PGA support 9. The PGA support 9 may include suitable connection systems for releasable connection of electrical control and instrumentation connections to the PGA 1. The PGA support 9 is raised above the bed 6 and so is accessible for connection of the electricity export cable 10 (and other connections). However, a support structure 5 in the form tripod can be expensive, particularly because of the need for multiple engagements with the bed 6.

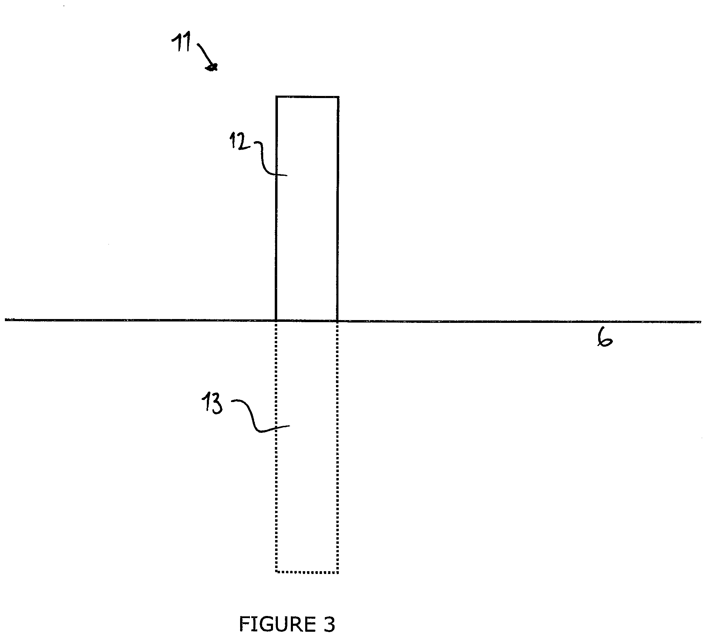

Figure 3 illustrates a second support structure for use with the PGA 1 of Figure 1. The second support structure 11 is a so-called "mono-pile", which consists of a single elongate cylindrical structure that has a first portion 12 extending above the bed 6 and a second portion 13 which extends into, and is supported by, the bed 6. A mono-pile has the advantage that it provides a more cost-effective support structure than the tripod of Figure 2, since the structure itself is simpler and requires only one drilling and securing operation. One obvious disadvantage of a mono-pile support structure is that the outer diameter of the support structure 11 must be smaller than the inner diameter of the hole drilled in the bed 6 for location of the second portion 13 of the support structure 11. Accordingly, in order to remain cost-effective, it is desirable to reduce the diameter of the drilled hole so as to reduce the size of drill required, whilst maintaining the required structure size for supporting the PGA.

In addition, location of the support structure 11 in the bed 6 must take place without any connection or locating equipment for the PGA being attached to the support structure 11 in order to minimise the risk of damage to such equipment. Attaching the connection and locating equipment to the support structure 11 after mounting in the bed 6 involves costly, difficult and risky marine operations. Furthermore, the support structure 11 does not have an open aperture through which the electricity export cable, and other connections, can pass. It is not desirable to provide an aperture in the wall of the support structure 11 since this could cause weakness in the support structure and/or require the use of thicker and heavier material for the wall of the support structure 11.

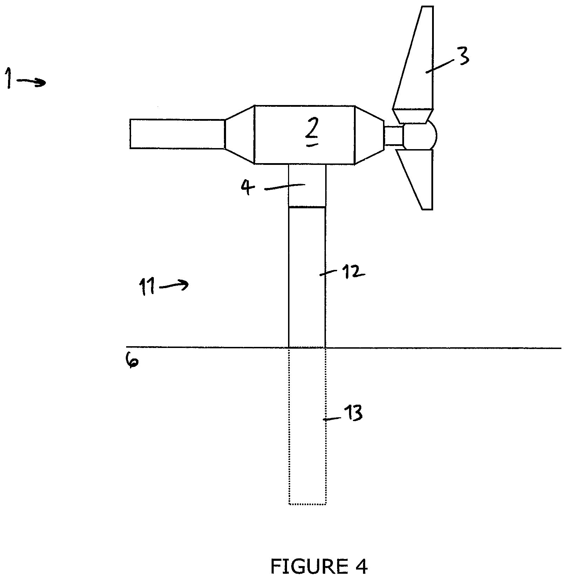

Figure 4 illustrates the PGA 1 in place on the support structure 11 which has the first portion 12 extending above the bed 6 and the second portion 13 extending into the bed 6. The engagement portion 4 of the PGA 1 engages with a top part of the first portion 12 of the support structure 11.

In order to export generated electrical power from the PGA 1, it is necessary to provide an export cable. A cable management system is required to enable the PGA 1 to rotate about the fixed support structure 11 in order that the PGA 1 is able to face into the water current flow. In the case of the tripod support structure shown in Figure 2, a cable management system can be provided within the engagement portion of the PGA 1, and the export cable 10 can exit through the open lower portion of the PGA support 9. One such cable management system is described in European Patent No. 2856577.

According to the principles of the present invention, a cable management system is provided that is suitable for use with the mounting of the PGA 1 on a mono-pile support structure.

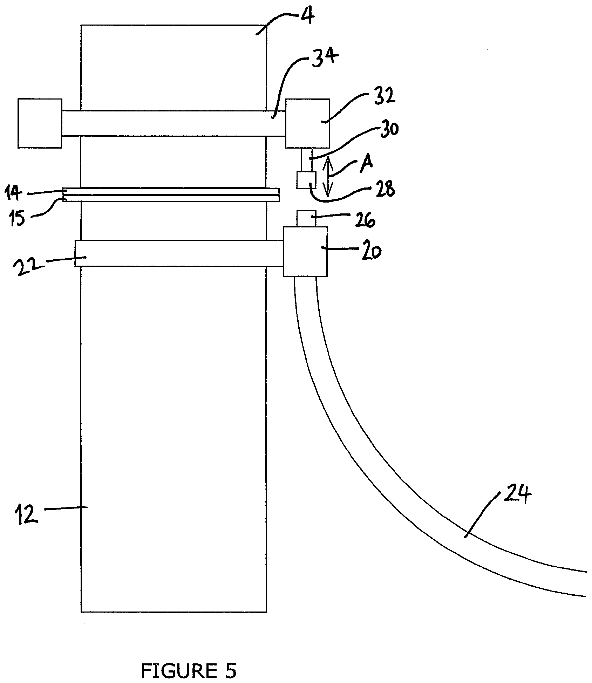

In accordance with those principles, a cable management system is provided outside of the engagement portion 4 of the PGA 1, and allows the PGA 1 to rotate with respect to an export cable connection. Figure 5 illustrates such a system schematically.

Figure 5 shows the engagement portion 4 of the PGA mounted on the upper portion 12 of the support structure. The engagement portion 4 is provided with a lower flange 14 which engages with an upper flange 15 of the support structure. The flange 14 is held in place on the flange 15 by a clamping system which is not shown for the sake of clarity. One example of a suitable clamp is shown in United Kingdom Patent No GB2448710.

An export cable termination unit 20 is attached to the support structure portion 12 by a suitable attachment device 22, such as a band clamp. A power export cable 24 is connected with the termination unit 20, and to an export connector 26 of that unit 20. The export cable is thereby held in place on the support structure.

A power connector 28 is provided on the engagement portion 4, to the outside of that engagement portion 4. The power connector 28 is mounted on a cable management system 32,34 by way of an actuator 30. The actuator is operable to move the power connector 28 in the direction indicated by arrow A into and out of engagement with the export connector 26. The cable management system 32, 34 is mounted on the outer surface of the engagement portion 4 of the PGA, and is arranged to move with the engagement portion 4, whilst maintaining the power connector 28 in a circumferential position fixed relative to the export connector. The export connector 26 and power connector 28 are preferably provided by a complementary pair of wet-mate connectors.

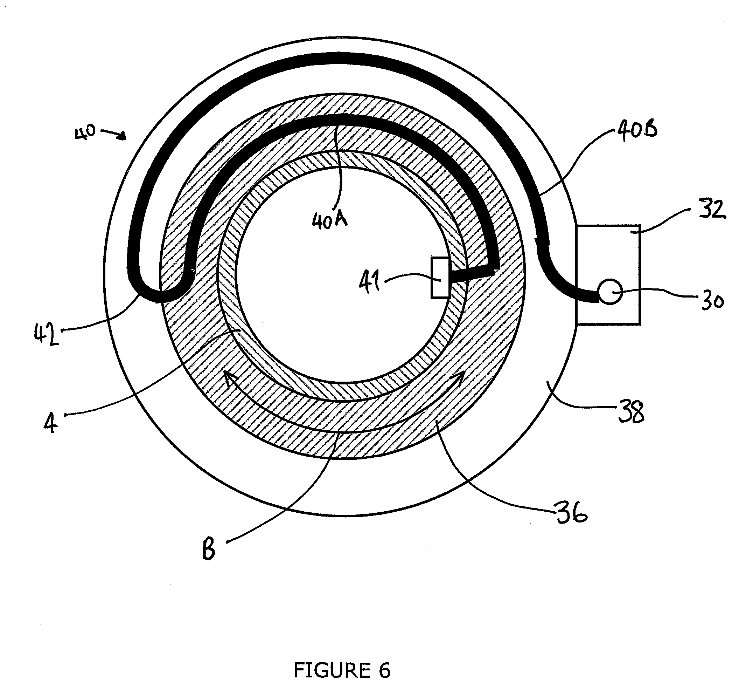

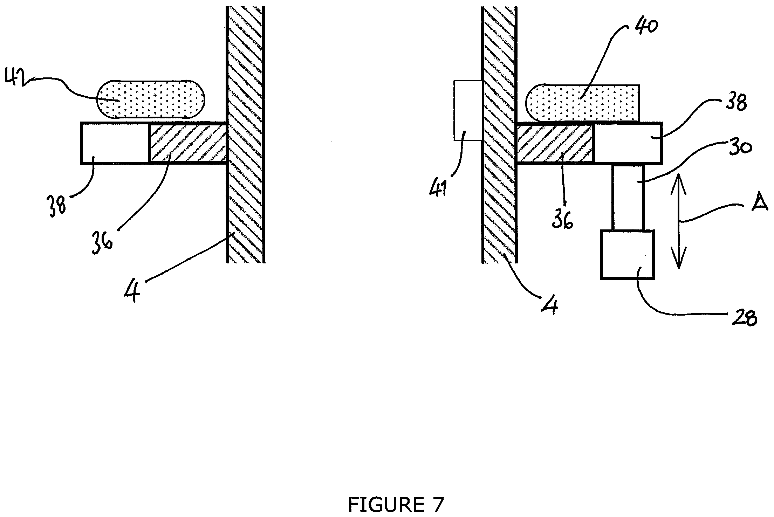

Figure 6 illustrates schematically a plan cross-sectional view of an example cable management system embodying the present invention. Figure 7 illustrates schematically a side cross-sectional view of the system Figure 6. Figures 6 and 7 illustrate the cable management system attached to the engagement portion 4 of the PGA. The cable management system comprises a first support plate 36 which is attached to the outer surface of the engagement portion 4, and is annular in form in this example. The support plate may be a continuous plate, as shown in Figure 6, or may be provided by an appropriate number of discrete portions. The first support plate 36 is arranged to move with the engagement portion 4, such that as the PGA rotates with respect to the support structure, the plate 36 rotates with the PGA, as indicated by arrow B. The first support plate 36 serves to support a first portion 40A of a power cable 40. the first portion 40A of the power cable is electrically connected with an internal connector 41 located within the engagement portion 4. The internal connector 41 serves to connect the power cable 40 to the electrical equipment housed in the PGA.

A second support plate 38 is located radially outwardly of the first support plate 36, and is annular in form in this example. The first support plate 36 is able to rotate with respect to the second support plate 38. The second support plate 38 carries the actuator 30 which operates to move the power connector 28 linearly with respect to the engagement portion 4. The second support plate 38 supports a second portion 40B of the power cable 40. The second portion 40B of the power cable 40 is connected with the first portion 40A by a reverse bend radius cable portion 42. The first and second portions 40A and 40B, and reverse bend radius portion 42 form the power cable 40. The second portion 40B of the power cable 40 is electrically connected with the power connector 28.

The power connector 28 is thereby electrically connected with the power generating equipment of the PGA by way of the power cable 40 and internal connector 41. The actuator 30 operates to bring the power connector 28 into electrical connection with the export connector 26 (Figure 5), thereby connecting the power generating equipment of the PGA with the export cable 10.

When the power connector 28 is engaged with the export connector 26, the second support plate 38 is prevented from rotating with respect to the support structure. The provision of the power cable 40 with a reverse bend radius portion 42 allows the PGA (and therefore the engagement portion 4) to rotate with respect to the support structure without losing the connection with the export cable 10. The power cable is supported at all times by the first and second support surfaces 36 and 38.

In order to align the power connector 28 with the export connector 28, the cable management system may be provided with an alignment drive. The alignment drive operates to rotate the second support plate 38 with respect to the first support plate 36 and engagement portion 4. The alignment drive may be provided by a hydraulic motor or other appropriate drive device.

During deployment of the PGA onto the support structure, the actuator 30 is retracted. The PGA engages with the support structure and is clamped in place. The second support plate 38 is then rotated about the engagement portion 4, by an alignment drive or other means, until the power connector 28 is aligned with the export connector 26. The actuator 30 is then operated to engage the power connector 28 with the export connector 26.

The aforementioned is not intended to be limiting with respect to the scope of the appended claims, which follow. It is also contemplated that various substitutions, alterations, and modifications may be made to the invention without departing from the scope of the invention as defined by the claims.

## Claims

1. A water current power generating system (1) comprising:
a support structure (11) located on the bed (6) of a body of water and including an export connector (26) of the support structure (11) for the export of electrical power from the system;
a power generating apparatus (2) including a rotor assembly (3), an electrical power generating unit rotatable by the rotor assembly (3) and operable to output electrical power, and an electrical output for export of electrical power from the power generating apparatus (2), the power generating apparatus (2) including an engagement portion (4) which is releasably attached to the support structure (11);
a clamp mechanism for releasably attaching the power generating apparatus (2) to the support portion, the clamp having a first position in which the power generating apparatus (2) is fixed with respect to the support structure (11), a second position in which the power generating apparatus (2) is rotatable about a substantially vertical axis with respect to the support structure (11), and a third position in which the power generating apparatus (2) is removable from the support structure (11);
a cable management system (32, 34) arranged to connect the electrical power generating unit of the power generating apparatus (2) to the export connector (26) of the support structure (11), the cable management system (32, 34) comprising:
an internal connector (41) located on the engagement portion (4) of the power generating apparatus (2) and electrically connected with the power generating unit of the power generating apparatus (2);
a first support plate (36) attached to, and extending at least partially around, an outer surface the engagement portion (4) of the power generating apparatus (2) for rotation therewith;
a second support plate (38) mounted radially outwards of the first support plate (36) for rotation about the axis with respect to the power generating apparatus (2);
a power connector (28) mounted on the second support plate (38), and movable between a first position in which the power connector (28) is disconnected from the export connector (26) of the support structure (11) and a second position in which the power connector (28) is electrically connected with the export connector (26) of the support structure (11); and
a flexible electrical cable which extends from the internal connector (41) to the power connector (28) thereby connecting electrically those connectors, and which is supported by the first and second support plates (36, 38).

2. A cable management system (32, 34) for a water current power generating system (1) comprising a support structure (11) located on the bed (6) of a body of water and including an export connector (26) of the support structure (11) for the export of electrical power from the system, a power generating apparatus (2) including a rotor assembly (3), an electrical power generating unit rotatable by the rotor assembly (3) and operable to output electrical power, and an electrical output for export of electrical power from the power generating apparatus (2), the power generating apparatus (2) including an engagement portion (4) which is releasably attached to the support structure (11), and a clamp mechanism for releasably attaching the power generating apparatus (2) to the support portion, the clamp having a first position in which the power generating apparatus (2) is fixed with respect to the support structure (11), a second position in which the power generating apparatus (2) is rotatable about a substantially vertical axis with respect to the support structure (11), and a third position in which the power generating apparatus (2) is removable from the support structure (11), the cable management system (32, 34) arranged to connect the electrical power generating unit of the power generating apparatus (2) to the export connector (26) of the support structure (11), the cable management system (32, 34) comprising:
an internal connector (41) for location on an engagement portion (4) of a power generating apparatus (2) to provide an electrical connection with the power generating unit of the power generating apparatus (2);
a first support plate (36) for attachment to an outer surface of such an engagement portion (4) of the power generating apparatus (2) for rotation therewith; a second support plate (38) mountable radially outwards of the first support plate (36) for rotation about the axis with respect to the power generating apparatus (2);
a power connector (28) mounted on the second support plate (38), and movable between a first position in which the power connector (28) is disconnected from the export connector (26) of the support structure (11) and a second position in which the power connector (28) is electrically connected with the export connector (26) of the support structure (11); and
a flexible electrical cable which extends from the internal connector (41) to the power connector (28) thereby connecting electrically those connectors, and which is supported by the first and second support plates (36, 38).

3. A system as claimed in claim 1 or 2, further comprising a connection actuator operable to move the power connector (28) between the first and second positions thereof.

4. A system as claimed in claim 1, 2 or 3, wherein the power connector (28) is moveable linearly between the first and second positions.

5. A system as claimed in any one of the preceding claims, further comprising an alignment actuator operable to rotate the second support plate (38) about the axis with respect to the first support plate (36).

6. A system as claimed in any one of the preceding claims, wherein the flexible electrical cable is provided by a cable having a reverse bend radius.

## Patentansprüche

1. Wasserströmungsstromerzeugungssystem (1), umfassend:
eine Stützstruktur (11), die auf dem Boden (6) eines Gewässers gelegen ist und einen Einspeiseverbinder (26) der Stützstruktur (11) für die Einspeisung von elektrischem Strom aus dem System einschließt;
eine Stromerzeugungsvorrichtung (2), die eine Rotoranordnung (3), eine elektrische Stromerzeugungseinheit, die durch die Rotoranordnung (3) drehbar ist und betriebsfähig ist, um elektrischen Strom auszugeben, und einen elektrischen Ausgang für die Einspeisung von elektrischem Strom aus der Stromerzeugungsvorrichtung (2) einschließt, wobei die Stromerzeugungsvorrichtung (2) einen Eingriffsabschnitt (4) einschließt, der lösbar an der Stützstruktur (11) angebracht ist;
einen Klemmmechanismus zum lösbaren Anbringen der Stromerzeugungsvorrichtung (2) an dem Stützabschnitt, wobei die Klemme eine erste Position, in der die Stromerzeugungsvorrichtung (2) in Bezug auf die Stützstruktur (11) befestigt ist, eine zweite Position, in der die Stromerzeugungsvorrichtung (2) in Bezug auf die Stützstruktur (11) um eine im Wesentlichen vertikale Achse herum drehbar ist, und eine dritte Position aufweist, in der die Stromerzeugungsvorrichtung (2) von der Stützstruktur (11) entfernbar ist;
ein Kabelverwaltungssystem (32, 34), das angeordnet ist, um die elektrische Stromerzeugungseinheit der Stromerzeugungsvorrichtung (2) mit dem Einspeiseverbinder (26) der Stützstruktur (11) zu verbinden, wobei das Kabelverwaltungssystem (32, 34) Folgendes umfasst:
einen internen Verbinder (41), der an dem Eingriffsabschnitt (4) der Stromerzeugungsvorrichtung (2) gelegen ist und mit der Stromerzeugungseinheit der Stromerzeugungsvorrichtung (2) elektrisch verbunden ist;
eine erste Stützplatte (36), die an einer Außenoberfläche des Eingriffsabschnitts (4) der Stromerzeugungsvorrichtung (2) angebracht ist und sich für eine Drehung damit wenigstens teilweise um diese herum erstreckt;
eine zweite Stützplatte (38), die radial außerhalb der ersten Stützplatte (36) für die Drehung um die Achse herum in Bezug auf die Stromerzeugungsvorrichtung (2) montiert ist;
einen Stromverbinder (28), der an der zweiten Stützplatte (38) montiert ist und zwischen einer ersten Position, in der der Stromverbinder (28) von Einspeiseverbinder (26) der Stützstruktur (11) getrennt ist, und einer zweiten Position bewegbar ist, in der der Stromverbinder (28) mit dem Einspeiseverbinder (26) der Stützstruktur (11) elektrisch verbunden ist; und
ein flexibles elektrisches Kabel, das sich aus dem internen Verbinder (41) zu dem Stromverbinder (28) erstreckt, wobei dadurch diese Verbinder elektrisch verbunden werden, und das von der ersten und der zweiten Stützplatte (36, 38) gestützt wird.

2. Kabelverwaltungssystem (32, 34) für ein Wasserströmungsstromerzeugungssystem (1), das Folgendes umfasst: eine Stützstruktur (11), die auf dem Boden (6) eines Gewässers gelegen ist und einen Einspeiseverbinder (26) der Stützstruktur (11) für die Einspeisung von elektrischem Strom aus dem System einschließt, eine Stromerzeugungsvorrichtung (2), die eine Rotoranordnung (3), eine elektrische Stromerzeugungseinheit, die durch die Rotoranordnung (3) drehbar ist und betriebsfähig ist, um elektrischen Strom auszugeben, und einen elektrischen Ausgang für die Einspeisung von elektrischem Strom aus der Stromerzeugungsvorrichtung (2) einschließt, wobei die Stromerzeugungsvorrichtung (2) einen Eingriffsabschnitt (4) einschließt, der lösbar an der Stützstruktur (11) angebracht ist, und einen Klemmmechanismus zum lösbaren Anbringen der Stromerzeugungsvorrichtung (2) an dem Stützabschnitt, wobei die Klemme eine erste Position, in der die Stromerzeugungsvorrichtung (2) in Bezug auf die Stützstruktur (11) befestigt ist, eine zweite Position, in der die Stromerzeugungsvorrichtung (2) in Bezug auf die Stützstruktur (11) um eine im Wesentlichen vertikale Achse herum drehbar ist, und eine dritte Position aufweist, in der die Stromerzeugungsvorrichtung (2) von der Stützstruktur (11) entfernbar ist, wobei das Kabelverwaltungssystem (32, 34) angeordnet ist, um die elektrische Stromerzeugungseinheit der Stromerzeugungsvorrichtung (2) mit dem Einspeiseverbinder (26) der Stützstruktur (11) zu verbinden, wobei das Kabelverwaltungssystem (32, 34) Folgendes umfasst:
einen internen Verbinder (41) für eine Lage an einem Eingriffsabschnitt (4) einer Stromerzeugungsvorrichtung (2), um eine elektrische Verbindung mit der Stromerzeugungseinheit der Stromerzeugungsvorrichtung (2) bereitzustellen;
eine erste Stützplatte (36) für die Anbringung an einer Außenoberfläche eines derartigen Eingriffsabschnitts (4) der Stromerzeugungsvorrichtung (2) für die Drehung damit; eine zweite Stützplatte (38), die radial außerhalb der ersten Stützplatte (36) für die Drehung um die Achse herum in Bezug auf die Stromerzeugungsvorrichtung (2) montierbar ist;
einen Stromverbinder (28), der an der zweiten Stützplatte (38) montiert ist und zwischen einer ersten Position, in der der Stromverbinder (28) von Einspeiseverbinder (26) der Stützstruktur (11) getrennt ist, und einer zweiten Position bewegbar ist, in der der Stromverbinder (28) mit dem Einspeiseverbinder (26) der Stützstruktur (11) elektrisch verbunden ist; und
ein flexibles elektrisches Kabel, das sich aus dem internen Verbinder (41) zu dem Stromverbinder (28) erstreckt, wobei dadurch diese Verbinder elektrisch verbunden werden, und das von der ersten und der zweiten Stützplatte (36, 38) gestützt wird.

3. System nach Anspruch 1 oder 2, ferner umfassend einen Verbindungsstellantrieb, der betriebsfähig ist, um den Stromverbinder (28) zwischen der ersten und der zweiten Position davon zu bewegen.

4. System nach Anspruch 1, 2 oder 3, wobei der Stromverbinder (28) linear zwischen der ersten und der zweiten Position bewegbar ist.

5. System nach einem der vorhergehenden Ansprüche, ferner umfassend einen Ausrichtungsstellantrieb, der betriebsfähig ist, um die zweite Stützplatte (38) um die Achse herum in Bezug auf die erste Stützplatte (36) zu drehen.

6. System nach einem der vorhergehenden Ansprüche, wobei das flexible elektrische Kabel durch ein Kabel mit einem Rückbiegeradius bereitgestellt wird.

## Revendications

1. Système de génération d'énergie d'un courant d'eau (1), le système comprenant :
une structure de support (11) située sur le lit (6) d'un plan d'eau et comportant un connecteur d'exportation (26) de la structure de support (11) pour l'exportation d'énergie électrique depuis le système ;
un appareil de génération d'énergie (2) comportant un ensemble rotor (3), une unité de génération d'énergie électrique pouvant être entraînée en rotation par l'ensemble rotor (3) et pouvant fonctionner pour produire de l'énergie électrique, et une sortie électrique pour exporter de l'énergie électrique depuis l'appareil de génération d'énergie (2), l'appareil de génération d'énergie (2) comportant une partie de mise en prise (4) qui est fixée de manière amovible à la structure de support (11) ;
un mécanisme de serrage pour fixer de façon amovible l'appareil de génération d'énergie (2) à la partie de support, le mécanisme de serrage ayant une première position dans laquelle l'appareil de génération d'énergie (2) est fixé par rapport à la structure de support (11), une deuxième position dans laquelle l'appareil de génération d'énergie (2) peut être entraîné en rotation autour d'un axe sensiblement vertical par rapport à la structure de support (11), et une troisième position dans laquelle l'appareil de génération d'énergie (2) est amovible de la structure de support (11) ;
un système de gestion de câbles (32, 34) agencé pour relier l'unité de génération d'énergie électrique de l'appareil de génération d'énergie (2) au connecteur d'exportation (26) de la structure de support (11), le système de gestion de câbles (32, 34) comprenant :
un connecteur interne (41) situé sur la partie de mise en prise (4) de l'appareil de génération d'énergie (2) et connecté électriquement à l'unité de génération d'énergie de l'appareil de génération d'énergie (2) ;
une première plaque de support (36) fixée à une surface extérieure, et s'étendant au moins partiellement autour d'une surface extérieure de la partie de mise en prise (4) de l'appareil de génération d'énergie (2) pour une rotation avec celui-ci ;
une seconde plaque de support (38) montée radialement à l'extérieur de la première plaque de support (36) pour une rotation autour de l'axe par rapport à l'appareil de génération d'énergie (2) ;
un connecteur d'énergie (28) monté sur la seconde plaque de support (38) et mobile entre une première position dans laquelle le connecteur d'énergie (28) est déconnecté du connecteur d'exportation (26) de la structure de support (11) et une deuxième position dans laquelle le connecteur d'énergie (28) est connecté électriquement au connecteur d'exportation (26) de la structure de support (11) ; et
un câble électrique flexible qui s'étend du connecteur interne (41) au connecteur d'énergie (28) connectant ainsi électriquement ces connecteurs, et qui est supporté par les première et seconde plaques de support (36, 38).

2. Système de gestion de câbles (32, 34) pour un système de génération d'énergie d'un courant d'eau (1) comprenant une structure de support (11) située sur le lit (6) d'un plan d'eau et comportant un connecteur d'exportation (26) de la structure de support (11) pour l'exportation d'énergie électrique depuis le système, un appareil de génération d'énergie (2) comportant un ensemble rotor (3), une unité de génération d'énergie électrique pouvant être entraînée en rotation par l'ensemble rotor (3) et pouvant fonctionner pour produire de l'énergie électrique et une sortie électrique pour l'exportation d'énergie électrique depuis l'appareil de génération d'énergie (2), l'appareil de génération d'énergie (2) comportant une partie de mise en prise (4) qui est fixée de manière amovible à la structure de support (11), et un mécanisme de serrage pour fixer de façon amovible l'appareil de génération d'énergie (2) à la partie de support, le mécanisme de serrage ayant une première position dans laquelle l'appareil de génération d'énergie (2) est fixé par rapport à la structure de support (11), une deuxième position dans laquelle l'appareil de génération d'énergie (2) peut être entraîné en rotation autour d'un axe sensiblement vertical par rapport à la structure de support (11), et une troisième position dans laquelle l'appareil de génération d'énergie (2) est amovible de la structure de support (11), le système de gestion de câbles (32, 34) étant agencé pour relier l'unité de génération d'énergie électrique de l'appareil de génération d'énergie (2) au connecteur d'exportation (26) de la structure de support (11), le système de gestion de câbles (32, 34) comprenant :
un connecteur interne (41) pour un emplacement sur une partie de mise en prise (4) d'un appareil de génération d'énergie (2) pour fournir une connexion électrique avec l'unité de génération d'énergie de l'appareil de génération d'énergie (2) ;
une première plaque de support (36) destinée à être fixée à une surface extérieure d'une telle partie de mise en prise (4) de l'appareil de génération d'énergie (2) pour être entraînée en rotation avec celui-ci ; une seconde plaque de support (38) pouvant être montée radialement à l'extérieur de la première plaque de support (36) pour être entraînée en rotation autour de l'axe par rapport à l'appareil de génération d'énergie (2) ;
un connecteur d'énergie (28) monté sur la seconde plaque de support (38) et mobile entre une première position dans laquelle le connecteur d'énergie (28) est déconnecté du connecteur d'exportation (26) de la structure de support (11) et une deuxième position dans laquelle le connecteur d'énergie (28) est connecté électriquement au connecteur d'exportation (26) de la structure de support (11) ; et
un câble électrique flexible qui s'étend du connecteur interne (41) au connecteur d'énergie (28) connectant ainsi électriquement ces connecteurs, et qui est supporté par les première et seconde plaques de support (36, 38).

3. Système selon la revendication 1 ou 2, comprenant en outre un actionneur de liaison pouvant fonctionner pour déplacer le raccord d'énergie (28) entre ses première et deuxième positions.

4. Système selon la revendication 1, 2 ou 3, dans lequel le raccord d'énergie (28) est mobile linéairement entre les première et deuxième positions.

5. Système selon l'une quelconque des revendications précédentes, comprenant en outre un actionneur d'alignement pouvant fonctionner pour entraîner en rotation la seconde plaque de support (38) autour de l'axe par rapport à la première plaque de support (36).

6. Système selon l'une quelconque des revendications précédentes, dans lequel le câble électrique flexible est fourni par un câble ayant un rayon de courbure inverse.
